# EUROPÄISCHE PATENTSCHRIFT

(11) **EP 1 417 820 B1**
(45) Veröffentlichungstag und Bekanntmachung des Hinweises auf die Patenterteilung: **08.02.2017**
(21) Anmeldenummer: 02762408.9
(22) Anmeldetag: 29.07.2002
(51) Int. Cl.: H04L 29/06

(54) **VERFAHREN UND COMPUTERSYSTEM ZUR SICHERUNG DER KOMMUNIKATION IN NETZWERKEN**
METHOD AND COMPUTER SYSTEM FOR SECURING COMMUNICATION IN NETWORKS
PROCEDE ET SYSTEME INFORMATIQUE PERMETTANT LA PROTECTION DE LA COMMUNICATION DANS DES RESEAUX

(30) Priorität: 07.08.2001 DE 10138865; 03.06.2002 DE 10224661
(43) Veröffentlichungstag der Anmeldung: 12.05.2004
(73) Patentinhaber: PHOENIX CONTACT Cyber Security AG, 12489 Berlin (DE)
(72) Erfinder: PIEPIORRA, Frank, 12435 Berlin (DE); MÄCHTEL, Michael, 81371 München (DE); JAENICKE, Lutz, 12347 Berlin (DE)
(74) Vertreter: Gulde & Partner
(86) Internationale Anmeldenummer: PCT/EP2002/008421
(87) Internationale Veröffentlichungsnummer: WO 2003/015369

(56) Entgegenhaltungen:
- WO-A-01/43393
- WO-A1-00/72171
- US-A- 5 896 499

## Beschreibung

Die Erfindung betrifft ein Verfahren und ein Computersystem zur Sicherung der Kommunikation in Netzwerken, welche insbesondere für individuell eingerichtete Sicherheitseinrichtungen für mobile Computersysteme einsetzbar sind, indem die Sicherung durch die Integration eines eingebetten Hard- und Softwaresystems in das Kommunikationsinterface der zu schützenden Datenverarbeitungseinrichtung erfolgt.

Bekannte Sicherheitslösungen für Firewalls, VPNs (Virtual Private Networks) oder Virenschutzlösungen werden auf zwei Arten realisiert:
Bei der ersten Vorgehensweise werden Softwarelösungen in das Betriebssystem des zu schützenden Rechners installiert. Dabei müssen die notwendigen Programme systembedingt vom Hauptprozessor ausgeführt werden. Eventuell benötigte geheime Schlüsseldaten müssen prinzipbedingt der Software zur Verfügung stehen. Sowohl die Software als auch die Schlüssel sind daher nicht vor unbefugtem Zugriff seitens des Benutzers oder von Programmen (hier insbesondere Schadsoftware wie Viren oder Trojanische Pferde) zu schützen.

Ein mobiler Nutzer, wie z. B. ein Geschäftsreisender, hat das Problem, daß er u. U. ständig den Anbieter eines Internetzuganges wechseln muß, um entsprechend schnell und kostengünstig über das Internet kommunizieren zu können. Er weiß in der Regel nicht, ob und welche Sicherheitsvorkehrungen der lokale Anbieter des Internetzugangs liefert und muß sich deshalb selbst schützen. Das kann bisher nur dadurch erfolgen, daß der mobile Nutzer gemäß dieser Vorgehensweise entsprechende Software auf seinem mobilen Gerät vorhält, die er gegebenenfalls an die Gegebenheiten des jeweiligen Netzanbieters anpassen muß. Die Konfigurierung ist in der Regel eine Aufgabe, die nur durch besonders geschultes Personal vorgenommen werden kann und die bei jedem neuen (mobilen) Gerät wiederholt werden muß.

Die zweite Vorgehensweise ist dadurch charakterisiert, daß Hardwarelösungen in Form von externen Rechnern (auf denen wiederum spezielle Sicherheits-Software installiert ist) realisiert werden, die entweder gezielt in die Netzwerkanbindung des zu schützenden Rechners eingebracht werden oder vom Provider der Netzwerkverbindung zur Verfügung gestellt (und meist auch administriert) werden.

Für beide Vorgehensweisen ist jedoch charakteristisch, daß die Konfiguration, die für einen wirksamen Schutz notwendig ist, von einem Laien kaum noch zu bewältigen ist. Aufgrund der besonderen Komplexität einer sicheren Netzwerkanbindung sind viele Benutzer nicht in der Lage, ihren Rechner sicher zu konfigurieren und das Regelwerk für die Sicherheitsfunktionen einzustellen, so daß es erforderlich ist, diese Einstellungen von einem besonders ausgebildeten Administrator vorgeben zu lassen. Bei Softwarelösungen, wie sie bei der oben geschilderten ersten Vorgehensweise eingesetzt werden, läßt sich u. a. ein wichtiger Sicherheitsaspekt nicht sicherstellen: es sollte dem Benutzer unmöglich sein, die vom Administrator gewählten Sicherheitseinstellungen versehentlich oder vorsätzlich zu ändern bzw. es sollte auch auf dem Client-Rechner eventuell vorhandenen Schadfunktionen nicht möglich sein, Sicherheitseinstellungen zu verändern oder geheime Schlüsseldaten abzurufen. Bisherige in Software realisierte Lösungen haben das Problem, daß sie oft nicht richtig konfiguriert sind, und daß andere auf dem zu sichernden Rechner laufende Software unbeabsichtigte Einflüsse haben kann. Das gesamte System ist dann in einem nicht definierten und somit unsicheren Zustand. Eine von einem Benutzer konfigurierte Sicherheitssoftware leistet bei Fehlkonfigurationen keinerlei Schutz und bietet daher nur eine trügerische Sicherheit. Software, die Sicherheit gewähren soll, muß daher von einem in diesem Bereich speziell geschulten Administrator konfiguriert werden. Da sich diese Anforderungen bei Softwarelösungen nicht sicherstellen lassen, ist die Verwendung einer eigenen Soft-/Hardwarelösung erforderlich, wie sie oben mit der zweiten Vorgehensweise bereits erwähnt wurden.

Bekannt ist aus der US-Patentschrift US 5,896,499 A ein eingebetteter Prozessor, der in Verbindung mit dem Hauptprozessor einer Computersystems Sicherheitsfunktionen wahrnimmt und insbesondere die Kommunikation zwischen dem Hauptprozessor und externen unsicheren Netzwerken überwacht. Dabei wird der eingebettete Prozessor von dem Hauptprozessor gesteuert.

In der internationalen Patentanmeldung WO 00/72171 A1 wird eine Lösung vorgestellt, die Netzwerkadministratoren kleiner lokaler Netze entlastet, indem eine fernkonfigurierbare Sicherheitseinheit bereitgestellt wird.

Diese fernkonfigurierbare Sicherheitseinheit wird von einem Sicherheitszentrum aus administriert.

Bei einer Soft-/Hardwarelösung, die vom Provider der Netzwerkanbindung zur Verfügung gestellt wird, ist nicht sichergestellt, ob der Provider die Sicherheitseinstellungen korrekt und im gewünschten Maße vollständig vorgenommen hat. Weiterhin bleibt die Möglichkeit, daß etwa beim Anschluß eines mobilen Computersystems (Laptop, PDA) in einem fremden Netzwerk der örtliche Bereich des Computernetzwerks von einer Sicherheitsvorrichtung (Firewall) vor äußeren Zugriffen geschützt ist, aber keine Sicherheitsmaßnahmen innerhalb des engeren Umfelds vorgesehen ist (z. B. innerhalb einer Arbeitsgruppe in einem Firmennetz).

Als ein weiterer Nachteil der bisher eingesetzten Lösungen ist anzusehen, daß Zugangsberechtigungen oft personenbezogen sind, was zur Folge hat, daß eine eigentlich berechtigte Person gegebenenfalls von einem Computer, dessen Sicherheitsfunktionen nicht speziell für ihn konfiguriert sind, keinen Zugang zu Daten erhält, obwohl er durchaus zum Zugriff berechtigt wäre.

Der Erfindung liegt daher die Aufgabe zu Grunde, eine Sicherheitslösung zu schaffen, die die genannten Nachteile, insbesondere eine zusätzliche Konfiguration von spezieller Hard- oder Software auf Nutzer-Rechnern (Clients), vermeidet und so die Gefahr der unbeabsichtigten Beeinflussung der Sicherheitssoftware durch andere auf dem Client installierte Software behebt.. Zusätzlich soll durch die Erfindung ein flexibler, clientbasierter Schutz von Computersystemen ermöglicht und eine Lösung bereitgestellt werden, die es erlaubt, sicherheitsrelevante Daten getrennt vom Client zu speichern und somit auch vor Zugriffen vom Client aus zu schützen.

Diese Aufgabe wird erfindungsgemäß gelöst durch die Merkmale im kennzeichnenden Teil der Ansprüche 1 und 18 im Zusammenwirken mit den Merkmalen im Oberbegriff. Zweckmäßige Ausgestaltungen der Erfindung sind in den Unteransprüchen enthalten.
Ein Vorteil des Verfahrens zur Sicherung der Kommunikation in Netzwerken unter Zwischenschaltung eines Sicherheits-Computersystems zwischen eine zu schützende Datenverarbeitungseinrichtung und das Netzwerk besteht darin, daß eine effektive Abwehr von schädigenden Zugriffen auf bzw. Eingriffen in die zu schützende Datenverarbeitungseinrichtung erreicht wird, indem der Datenaustausch zwischen der zu schützenden Datenverarbeitungseinrichtung und dem Netzwerk durch das embedded System überwacht und/oder gesteuert wird, wobei das embedded System als autonome Einheit arbeitet, in dem Sinne, daß alle für die korrekte Ausführung der auf dem embedded System installierten Überwachungs- und/oder Steuerfunktionen erforderlichen Daten auf dem embedded System verfügbar sind und die Konfiguration des embedded System und/oder auf dem embedded System installierte Überwachungs- und/oder Steuerfunktionen allein über eine vom Betriebsystem der zu schützenden Datenverarbeitungseinrichtung unabhängige Verbindung veränderbar sind.

Ein Computersystem zur Ausführung eines Verfahrens zur Sicherung der Kommunikation in Netzwerken gemäß Anspruch list vorteilhafterweise so aufgebaut, daß das Computersystem als embedded System, beispielsweise als Singleboardcomputer oder als Chip-Lösung, ausgebildet ist und mindestens ein Mittel zum Datenaustausch mit einer zu schützenden Datenverarbeitungseinrichtung, mindestens ein Mittel zum Datenaustausch mit dem Netzwerk und mindestens ein Mittel zur Überwachung und/oder Steuerung der Kommunikation zwischen der zu schützenden Datenverarbeitungseinrichtung und dem Netzwerk umfasst, wobei die für die korrekte Arbeitsweise der Mittel zur Überwachung und/oder Steuerung erforderlichen Daten auf dem Computersystem selbst verfügbar sind und das embedded System so eingerichtet ist, daß die Konfiguration und/oder auf dem embedded System installierte Überwachungs- und/oder Steuerfunktionen allein über eine vom Betriebsystem der zu schützenden Datenverarbeitungseinrichtung unabhängige Verbindung veränderbar sind. Bevorzugt ist hierbei vorgesehen, daß ein Mittel zum Datenaustausch mit einer zu schützenden Datenverarbeitungseinrichtung an das Bus-System der zu schützenden Datenverarbeitungseinrichtung anschließbar ist und/oder ein Mittel zum Datenaustausch mit dem Netzwerk als Netzwerk-Interface ausgebildet ist.

Ein weiterer Vorteil des Verfahrens zur Sicherung der Kommunikation in Netzwerken von Datenverarbeitungseinrichtungen ist darin zu sehen, daß das Sicherheits-Computersystem mit dem Bus-System der zu schützenden Datenverarbeitungseinrichtung verbunden und eine Verbindung zwischen der zu schützenden Datenverarbeitungseinrichtung und dem Netzwerk über eine Schnittstelle des Sicherheits-Computersystems hergestellt wird.

Eine bevorzugte Ausführungsform des erfindungsgemäßen Verfahrens sieht vor, daß das für die Überwachung und/ oder Steuerung der zwischen der zu schützenden Datenverarbeitungseinrichtung und dem Netzwerk auszutauschenden Daten vorgegebene Regelwerk personenbezogene und/oder auf die zu schützende Datenverarbeitungseinrichtung individuell vorgegebene Regeln umfaßt.

Ein weiterer Vorteil ist darin zu sehen, daß das individuell vorgegebene Regelwerk die Berechtigung zum Zugriff aus Quellsystemen auf die zu schützende Datenverarbeitungseinrichtung prüft und/oder die Berechtigung zum Zugriff auf Zielsysteme von der zu schützenden Datenverarbeitungseinrichtung aus prüft und/oder die Ver- und/oder Entschlüsselung der auszutauschenden Daten realisiert und/oder den Aufbau eines Virtual Private Network (VPN) vornimmt und die auszutauschenden Daten transparent durch den VPN-Kanal überträgt und/ oder den Inhalt der auszutauschenden Daten analysiert.

Die Analyse des Inhalt der auszutauschenden Daten dient dabei u. a. der Detektion von Viren und/oder Trojanischen Pferden. Der bestmögliche Schutz wird natürlich dann erreicht, wenn alle zwischen der zu schützenden Datenverarbeitungseinrichtung und dem Netzwerk auszutauschende Daten das Sicherheits-Computersystem durchlaufen.

Darüber hinaus erweist es sich als Vorteil, daß der Aufbau eines VPN erst nach erfolgreicher Authentifikation erfolgt.

Eine weitere bevorzugte Ausführungsform des erfindungsgemäßen Verfahrens sieht vor, daß die Konfiguration des Sicherheits-Computersystems und/oder der embedded Software über eine Schnittstelle zum Netzwerk erfolgt. Es ist weiterhin vorgesehen, daß die Wartung und/oder Pflege des Sicherheits-Computersystems von der zu schützenden Datenverarbeitungseinrichtung aus und/oder als Fernwartung über das Netzwerk allein über eine vom Betriebsystem der zu schützenden Datenverarbeitungseinrichtung unabhängige Verbindung erfolgt. Erforderlichenfalls umfaßt die Wartung und/oder Pflege der embedded Software die Erweiterung der Funktionalität des als embedded Software implementierten Computerprogramms.

Das Sicherheits-Computersystem bzw. die Sicherheitseinstellungen auf diesem System werden vorteilhafterweise so gesichert, daß das die zwischen der zu schützenden Datenverarbeitungseinrichtung und dem Netzwerk auszutauschenden Daten überwachende und/oder steuernde Computerprogramm von Seiten der zu schützenden Datenverarbeitungseinrichtung nicht oder nur nach Aufbau einer vom Betriebsystem der zu schützenden Datenverarbeitungseinrichtung unabhängigen Verbindung und anschließender Authentifikation veränderbar ist.

Eine besonders einfache Administration ergibt sich dann, wenn das Sicherheits-Computersystem für die zu schützende Datenverarbeitungseinrichtung und/oder für das Netzwerk transparent erscheint. Eine zusätzliche Sicherheitsebene kann dadurch erreicht werden, daß das Sicherheits-Computersystem nicht transparent ist, sondern auf der Seite der zu schützende Datenverarbeitungseinrichtung ein eigenes privates Teilnetz errichtet und vom Netzwerk aus nur das Sicherheits-Computersystem sichtbar ist.

Insbesondere bei mobilen Geräten ist es von Vorteil, daß das Sicherheits-Computersystem als eingebettetes System in das Kommunikationsinterface der zu schützenden Datenverarbeitungseinrichtung integriert wird. Dies kann erfolgen, indem das Sicherheits-Computersystem als Einsteckkarte oder als PCMCIA-Karte in die zu schützende Datenverarbeitungseinrichtung integriert wird. Vorteilhafterweise erfolgt im Falle mobiler Geräte die Stromversorgung des Sicherheits-Computersystems über die zu schützende Datenverarbeitungseinrichtung.
Der Einsatz des erfindungsgemäßen Sicherheits-Computersystems wird außerdem dadurch erleichtert, daß es wie herkömmliche Netzwerkanschluß-Hardware an die zu schützende Datenverarbeitungseinrichtung angeschlossen wird.

Die Sicherheit der zu schützenden Datenverarbeitungseinrichtung wird insbesondere dadurch erhöht, daß geheimzuhaltende Daten wie beispielsweise elektronische Schlüssel oder elektronische Signaturen nur auf dem Sicherheits-Computersystem vorhanden sind. Eine zusätzliche Erhöhung der Sicherheit wird dadurch erreicht, daß auf dem Sicherheits-Computersystem vorhandene geheimzuhaltende Daten von Seiten der zu schützenden Datenverarbeitungseinrichtung nicht oder nur nach Aufbau einer vom Betriebsystem der zu schützenden Datenverarbeitungseinrichtung unabhängigen Verbindung und anschließender Eingabe eines Passwortes veränderbar oder abfragbar sind.

In Abhängigkeit von den Schnittstellen der zu schützenden Datenverarbeitungseinrichtung ist das Sicherheits-Computersystem vorteilhaft derart ausgeführt, daß es ein Mittel zum Datenaustausch mit einer zu schützenden Datenverarbeitungseinrichtung aufweist, welches als PCMCIA-Bus oder als PCI-Bus oder als USB-Bus oder als IEEE 1394-Bus (Firewire) oder aber als RS-232-Schnittstelle oder als Ethernet-Schnittstelle oder als USB-Schnittstelle ausgebildet ist.

In einer bevorzugten Ausführungsform des erfindungsgemäßen Computersystems ist darüber hinaus vorgesehen, daß wenigstens ein Mittel zum Datenaustausch mit dem Netzwerk ein Modem und/oder einen Funktelefonprozessor umfaßt.

Darüber hinaus erweist es sich als Vorteil, daß wenigstens ein Mittel zur Überwachung und/oder Steuerung der Kommunikation einen Firewall und/oder ein Intrusion Detection System und/oder ein Public Key Management umfaßt.

Um einen möglichst hohen Miniaturisierungsgrad zu erreichen, ist in einer bevorzugten Ausführungsform des erfindungsgemäßen Computersystems vorgesehen, daß das Computersystem als System on Chip ausgebildet ist.

Eine nutzerfreundliche Handhabung wird dadurch erreicht, indem das Sicherheits-Computersystem in ein Kabel oder eine Karte für den Netzwerkzugang oder ein Chip für den Netzwerkzugang integriert oder als Einsteckkarte oder als PCMCIA-Karte ausgebildet ist.

Dadurch, daß die Sicherheitsvorrichtung zu der zu schützenden Datenverarbeitungseinrichtung gehört und deren speziellen Schutz übernimmt, gleichzeitig aber als eingebettetes System eine unabhängige, von Fehlern seitens des Client-Systems oder seines Benutzers unbeeinflußte Einheit darstellt, ist eine bestmögliche Schutzwirkung gewährleistet.

Als vorteilhaft erweist es sich, daß System für den Nutzer vollständig transparent erscheint und zur Vereinfachung der Handhabung so mit der zu schützenden Datenverarbeitungseinrichtung verbunden ist, daß es in diese integriert ist und vom Nutzer so an das Netzwerk angeschlossen werden kann, wie normale Netzwerkanschluß-Hardware angeschlossen werden würde.

Weitere Vorteile der Erfindung gegenüber einer reinen Softwarelösung auf dem Client wie z. B. PC oder mobilen Geräten (Notebook, PDA o. ä.) liegen darin, daß durch die Erfindung der Client vor dem direkten Zugriff aus dem Internet geschützt wird, da er bei entsprechender Konfiguration keine aus dem Internet erreichbare Adresse erhält. Die Konfigurationsdaten für den Internet/Intranet-Zugang liegen geschützt auf dem erfindungsgemäßen Computersystem und nicht auf dem Client. Die Daten sind somit nicht vom Benutzer kopierbar oder veränderbar.

In der Erfindung liegt ein eingebettetes Hard- und Softwaresystem vor, welches der Benutzer nicht ändern kann und nicht zu ändern braucht. Das Problem der bis- - herigen Softwarelösungen, daß sie aufgrund der hohen Komplexität der Systeme bzw. durch mangelhafte Kompetenz des Administrators oft nicht richtig konfiguriert sind oder daß andere Software unbeabsichtigte Einflüsse haben kann, wird damit behoben.

Die Erfindung vereint einen Mini-Firewall und ein VPN in einem Gerät. Die komplexe Konfiguration eines solchen Systems entfällt für den Benutzer. Sie wird nur vom Administrator vorgenommen, wodurch ein hohes Sicherheitslevel erreicht wird.

Alle Keys (Schlüssel, Passwörter) und personenspezifischen Informationen werden sicher auf der vom Client unabhängigen Hardware des eingebetteten Hard- und Softwaresystems gespeichert. Somit muß diese Information nicht auf dem Client vorgehalten werden. Auch diese Trennung - es gibt hier zwei unterschiedliche Betriebssysteme - führt dazu, daß die gesamte Sicherheit auf ein weitaus höheres Level gehoben wird, als wenn sich alle Software auf nur einem System befindet. Dieses Prinzip der unterschiedlichen Betriebssysteme wird bei mehrstufigen Firewalls ganz bewußt angewendet, um Angriffe wirksamer abzuwehren.

Die Konfiguration des eingebetteten Hard- und Softwaresystems ist remote über einen sicheren Kanal durchführbar. Der Administrator muß sich dabei nur noch mit der Konfiguration einer Software beschäftigen, da das eingebettete Hard- und Softwaresystem nicht vom Betriebssystem des zu schützendem (mobilen) Gerätes abhängig ist. Bisher mußte ein Administrator für jedes im Einsatz befindliche Betriebssystem (Unix, MacOS, Windows, ...) wissen, welche Software zu welchem Zweck der Absicherung (Firewalling/VPN) verfügbar ist und wie diese konfiguriert werden muß.

Die Erfindung soll nachstehend anhand von einem zumindest teilweise in den Figuren dargestellten Ausführungsbeispiel näher erläutert werden.

Es zeigen:
- Fig. 1: Anordnung des Computersystems bei Anschluß eines Client an ein Kommunikationsnetzwerk,
- Fig. 2: Blockschaltbild der Hardware-Module des Computersystems,
- Fig. 3: auf dem Prozessor des Computersystems installierte Software-Komponenten,
- Fig. 4: Darstellung der client- bzw. serverseitigen Datenflüsse,
- Fig. 5: Darstellung beispielhafter Schnittstellen des Computersystems.
- Fig. 6: eine Prinzipdarstellung für eine Sicherheitslösung, bei welcher die Sicherheitsfunktionen in das Betriebssystem des zu schützenden Rechners installiert wurden;
- Fig. 7: eine Prinzipdarstellung für eine Sicherheitslösung unter Benutzung externer SicherheitsHardware (z. B. Firewall),
- Fig. 8: eine Prinzipdarstellung für eine Sicherheitslösung unter Benutzung eines zwischen Bussystem und Netzwerkinterface eingefügten Sicherheitssystems (Hardware und Software).

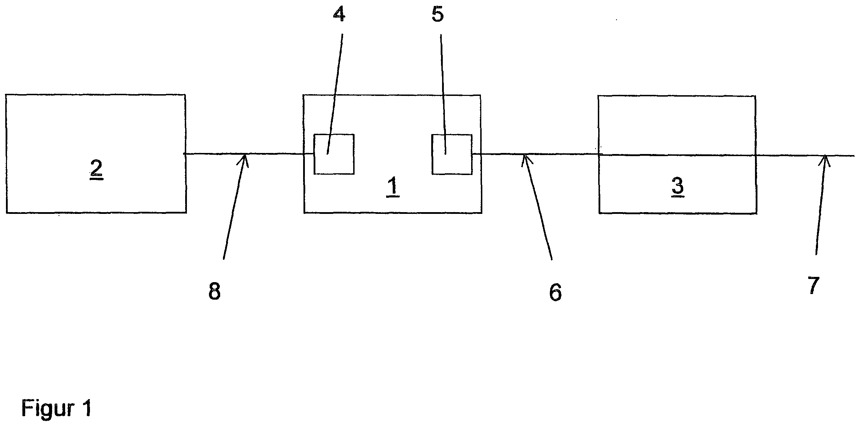

Moderne eingebettete Systeme (Singleboard Computer bzw. Einplatinenrechner) zeichnen sich dadurch aus, daß sie stark miniaturisiert werden können. Besonders kompakt sind sog. Systems on Chip gestaltet. Um eine weitere Größenordnung verringern sich die Abmessungen der Computersysteme, wenn die Verfahren als Chip-Lösung in einem einzelnen Chip ausgeführt sind. Eine beispielhafte Ausführung der Erfindung kann deshalb darin bestehen, daß ein eingebettetes Hard- und Softwaresystem 1 verwendet wird, welches als System on Chip oder als Chip-Lösung ausgeführt ist, wodurch es sich aufgrund der kleinen Bauform (Chip-Größe) leicht z. B. in eine PCMCIA-Karte oder ein (Funk-)Telefongerät integrieren läßt. Dadurch ist die Erfindung auch einsetzbar, wenn für den Zugang in ein Netzwerk solche Schnittstellen wie z. B. WLAN (Wireless Local Area Network), GPRS (General Paket Radio Services) oder UMTS (Universal Mobile Telecommunications Systems) genutzt werden oder etwa bei gebührenpflichtigen Netzdiensten eine Pay-Card eingesetzt werden soll. Erfindungsgemäß wird zur Sicherung der Kommunikation in Netzwerken das Sicherheits-Computersystem als eingebettetes Hard- und Softwaresystem 1 zwischen den Client-Rechner 2 und das Netzwerk 45 eingefügt (vgl. Figur 1). In einer bevorzugten Ausführungsform ist die Erfindung so ausgeführt, daß die physikalische Größe des eingebetteten Hard- und Softwaresystems 1 eine Implementierung in ein Kabel o. ä. erlaubt.

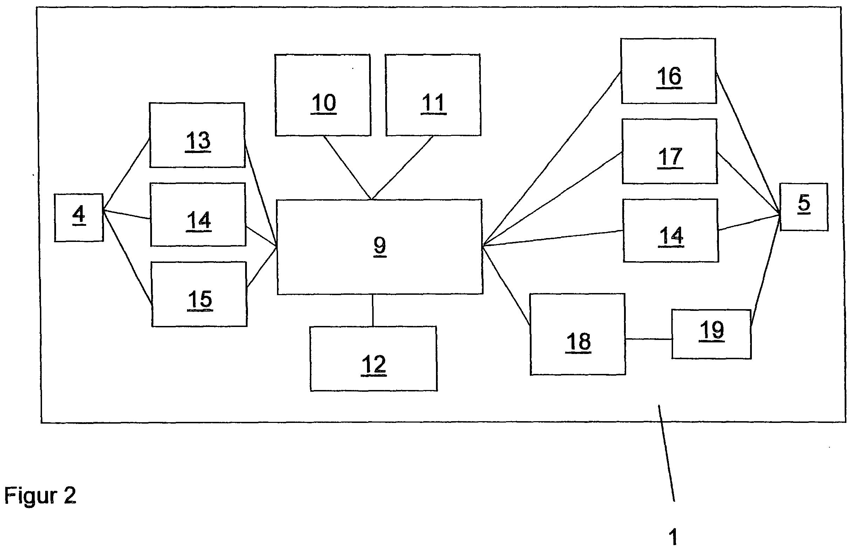

Die eingebettete Software ist vorteilhaft so konfiguriert, daß sie Sicherheitsfunktionen liefert, die den angeschlossenen Client 2 (z. B. ein mobiles Gerät) und den Internetzugang in ihrer Funktion nicht beeinflussen und von diesen auch nicht aus dem Kommunikationsprotokoll ersichtlich sind. Der prinzipielle physikalische Aufbau ist in Fig. 2 dargestellt. Eine beispielhafte Ausführungsform des eingebetteten Hard- und Softwaresystems 1 umfaßt beispielsweise als Hardware-Module einen Prozessor 9, ein RAM 10, ein Flash-ROM 11. Es erweist sich als sinnvoll, daß wenigstens die gängigsten Schnittstellen für die Kommunikation in Netzwerken durch das eingebettete Hard-und Softwaresystem 1 unterstützt werden.

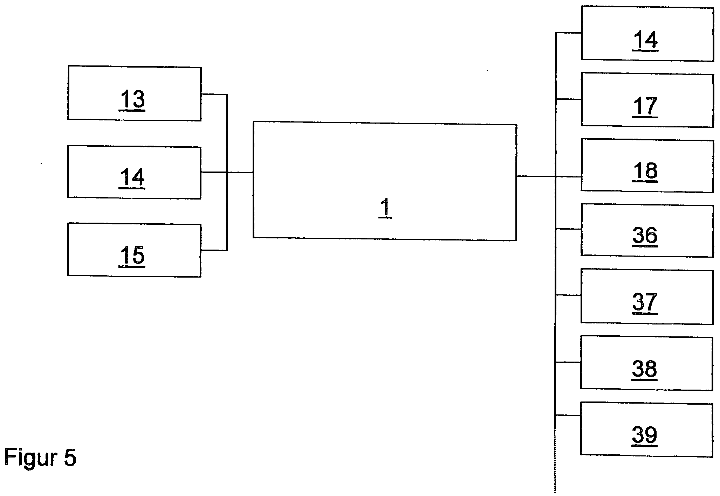

Der Client 2 (Notebook, PC usw.) kann beispielsweise über folgende Schnittstellen (Interfaces) 4 angeschlossen werden (vgl. auch Fig. 5):
- RS-232-Schnittstelle 13,
- Ethernet-Schnittstelle 14,
- USB-Schnittstelle 15.

Dies ist die gängige Vorgehensweise. Das eingebettete Hard-und Softwaresystem 1 kann jedoch - wie weiter unten detailliert beschrieben wird - auch über das Bussystem 43 mit dem Client-Rechner 2 verbunden werden. In diesem Falle müßten verschiedene Bussysteme 43 unterstützt werden, wie etwa:
- als PCMCIA-Bus oder
- als PCI-Bus oder
- als USB-Bus oder
- als IEEE 1394-Bus (Firewire).

Das eingebettete Hard- und Softwaresystem 1 sollte für die Verbindung mit dem Internet 6 mehrere serverseitige Schnittstellen 5 zur Verfügung stellen:
- IRDA-Schnittstelle 16,
- Bluetooth-Schnittstelle 17,
- Ethernet-Schnittstelle 14 (z. B. ADSL),
- RJ-45-Schnittstelle 19 (für den Anschluß ans Telefonnetz über ein Modem 18).

Außerdem können weitere Schnittstellen vorgesehen sein, wie in Fig. 5 veranschaulicht:
- ein Modem 18,
- eine UMTS-Schnittstelle 36,
- eine DSL-Schnittstelle 37,
- eine GPRS-Schnittstelle 38 und/oder
- eine POT-Schnittstelle 39.

Erforderlichenfalls kann eine Stromversorgung 12 vorgesehen sein.

Dabei sind diese Aufzählungen nicht abschließen zu betrachten. Neu zu entwickelnde Schnittstellenprotokolle sollten sinnvollerweise in das eingebettete Hard- und Softwaresystem 1 integriert werden. Die Hardwarelösung wird zur Minimalisierung - auch im Sinne des Minimalitätsprinzips der Computersicherheit - so ausgelegt, daß nur die notwendigen Ressourcen (CPU, Speicher) verwendet werden, die für die Operation eines eingebetteten Betriebssystems notwendig sind. Das eingebettete Betriebssystem und die für die jeweilige Funktionalität notwendigen Systemprogramme unterstützen Sicherheitsanwendungen in der Weise, daß alle Sicherheitsfunktionen derart implementiert werden, daß keine Veränderungen auf dem Client 2 oder an dem Internetzugang notwendig sind. Eine Konfiguration der Sicherheitssoftware kann nur durch den Systemadministrator erfolgen, der in diesem Bereich erheblich besser ausgebildet ist als ein normaler Benutzer. Das eingebettete Hard-und Softwaresystem 1 kann dann die Sicherheit des zu schützenden, dahinterliegenden Geräts (Client 2) gewährleisten, ohne daß vom Benutzer in die Konfiguration der für die Sicherheit notwendigen Software eingegriffen werden muß oder kann.
Das eingebettete Hard- und Softwaresystem 1 übernimmt beim Anschluß an ein Fremdnetz (z. B. das Internet 6) zum einen die für den Client 2 notwendige Firewall-Funktionalität und steht zum anderen gleichzeitig als Server für die Kommunikation des Client 2 über ein VPN zum internen Firmennetzwerk (Intranet 7) zur Verfügung. Durch die räumliche Trennung der zum Arbeiten benutzten Hard- und Software von der auf einem 'gehärteten' Betriebssystem befindlichen, zur Sicherheit notwendigen Firewall- und VPN-Software ist die Sicherheit des zu schützenden Computers (Client-Rechner 2) wesentlich höher, als wenn alle Programme auf einer Maschine liefen. Dabei versteht man unter einem 'gehärteten' Betriebssystem ein auf die absolut notwendige Funktionalität reduziertes Betriebssystem. In der Computersicherheit gilt das Minimalitätsprinzip: je weniger Software auf einem Gerät zur Verfügung steht, desto geringer ist die Anfälligkeit auf sicherheitsrelevante Fehler in der Software, die einen Angriff ermöglichen können. Andererseits ist die Verhinderung der Konfiguration durch einen Benutzer, der durch eine unabsichtliche Fehlkonfiguration die Sicherheit des zu schützenden Gerätes in wesentlichen Teilen beeinträchtigen könnte, auch nur durch die räumliche Trennung der Komponenten ,Arbeit' und 'Sicherheit' möglich.

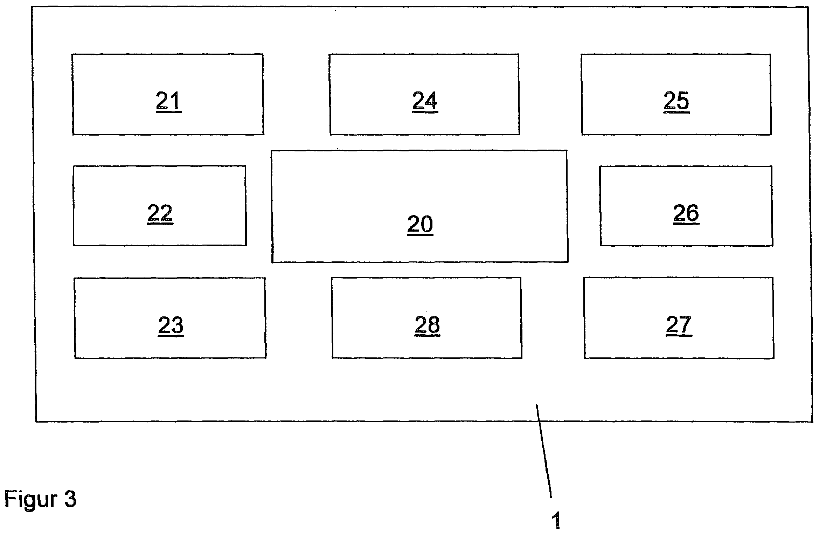

Bei dem erfindungsgemäßen Verfahren wird die Kommunikation beispielsweise zwischen einem mobilen Gerät (Client 2) und dem Internet 6 durch das eingebettete Hard- und Softwaresystem 1 vermittelt. Die notwendigen und optional möglichen Softwarekomponenten sind in Fig. 3 dargestellt. Für ein Basissystem sind dabei der transparente Router/VPN (z. B. IPsec) 20, der DHCP 23, das Key Management 25, der Firewall 26 und die Remote Control 27 als notwendige Module anzusehen. Zusätzliche Module wie beispielsweise eine Systemüberwachung 21, IDS 22, ein automatisches Update 24 und weitere optionale Software-Module 28 können natürlich hinzugefügt werden; sie dienen der Funktionalitätserweiterung, die z. B. als Viren-Scanner für e-mails implementiert sein kann.

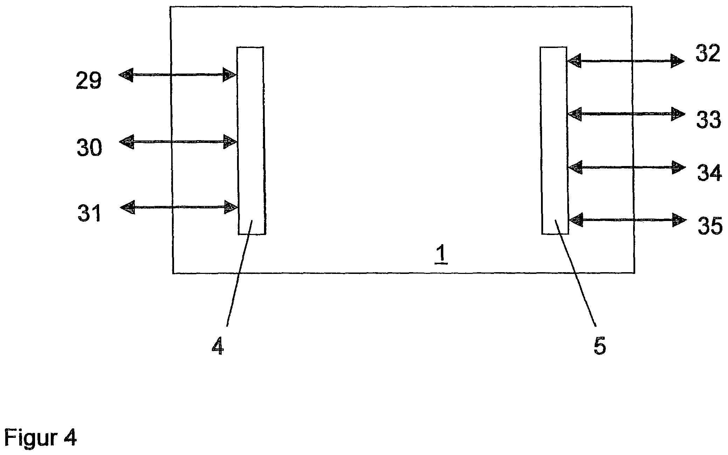

Bei entsprechender Konfiguration besteht zwischen dem Client 2 und dem Internet 6 kein direkter Datenfluß. Vielmehr wird eine Kommunikationsverbindung 8 zwischen dem Client 2 und dem eingebetteten Hard- und Softwaresystem 1, sowie separat zwischen dem eingebetteten Hard- und Softwaresystem 1 und dem Internet 6 aufgebaut. Die Aufteilung der Datenflüsse zeigt Fig. 4.

Wesentliche Bestandteile des client-seitigen Datenflusses stellen etwa
- der Verbindungsaufbau 29 zum Client 2,
- der Austausch 30 unverschlüsselter Daten und
- der Austausch 31 der IP-Adressen dar.

Server- bzw. netz-seitig beinhaltet der Datenfluß beispielsweise
- den Verbindungsaufbau 32 zu Server 3,
- den Datenaustausch 33 zum Management,
- den Datenaustausch 34 zur Konfiguration des eingebetteten Hard- und Software-Systems 1 und
- den Datenaustausch 35 beim Update des eingebetteten Hard- und Software-Systems 1.

Der Systemadministrator konfiguriert das eingebettete Hard-und Softwaresystem 1 und setzt dabei bspw. bei Nutzung eines VPN die folgenden Parameter:
- X.509 Zertifikat für das eingebettete Hard- und Softwaresystem 1 und Private Key,
- X.509 Zertifikat der Firma, die das VPN nutzt,
- Adresse des Netzwerks hinter dem VPN Gateway der Firma,
- Adresse des VPN Gateways der Firma.

Wenn der Benutzer das eingebettete Hard- und Softwaresystem 1 für die Kommunikation in einem Netzwerk 45 nutzt, wird zwischen dem mobilen Gerät (Client 2) und dem eingebetteten Hard- und Softwaresystem 1 eine Verbindung aufgebaut (z. B. durch den DHCP-Server 23 des eingebetteten Hard- und Softwaresystems 1). Außerdem wird eine Verbindung zwischen dem eingebetteten Hard- und Softwaresystem 1 und dem Internet 6 aufgebaut, bei der das VPN und der Firewall 26 aktiviert werden.

Das eingebettete Hard- und Softwaresystem 1 und ein spezieller Server 3 innerhalb des Unternehmens, welches das VPN einsetzt, dienen dabei als Endpunkte des VPN. Entweder ist der Server 3 als Internetzugang für das Unternehmen eingerichtet oder aber die IP Pakete werden vom eingebetteten Hard- und Softwaresystem 1 durch den existierenden Internetzugang zum Server 3 getunnelt (VPN-Endpunkte). Außerdem ist der Server 3 für die Konfiguration des eingebetteten Hard- und Softwaresystems 1 verantwortlich. Meldet sich ein Client 2 über das eingebettete Hard- und Softwaresystem 1 beim Server 3 an, wird außerdem der SW-Stand des eingebettete Hard- und Softwaresystems 1 überprüft und gegebenenfalls erneuert (automatisches Update). Weiterhin ist der Server 3 für die dedizierte Zugriffskontrolle auf die firmeninternen Ressourcen notwendig.

Wird das VPN zum Beispiel mit dem IPsec-Protokoll realisiert, wickelt das VPN über UDP Port 500 den Schlüsselaustausch mit dem vorkonfigurierten VPN Gateway der Firma ab. Nach erfolgreichem Schlüsseltausch werden IP Pakete vom Typ 50 (ESP) (das sind die verschlüsselten IP Pakete) zwischen dem eingebetteten Hard- und Softwaresystem 1 und dem VPN Gateway ausgetauscht. Welche IP Pakete das eingebettete Hard- und Softwaresystem 1 verschlüsseln und dem VPN Gateway zukommen lassen muß, erkennt es über die vorkonfigurierte Adresse des Netzwerks hinter dem VPN Gateway der Firma, die computertechnisch ein Eintrag im Routing Table auf dem virtuellen IPSec Device ist.
Danach steht die VPN-Verbindung; ein geregelter und geschützter Zugriff in das Firmen-Intranet 7 sowie ins Internet 6 kann stattfinden. Das eingebettete Hard- und Softwaresystem 1 läßt sich somit transparent in den Verbindungsweg zwischen dem Client 2 und dem Internet 6 einfügen. Aus Sicht des mobilen Geräts (Client 2) stellt das eingebettete Hard- und Softwaresystem 1 bereits das Modem 18 oder den LAN Anschluß zum Internet 6 dar, spezifische Softwareanpassungen sind auf dem mobilen Gerät nicht notwendig.
Der Firewall 26 schützt den Client 2 auf zweierlei Weise, zum einen wirkt er als Paketfilter, zum anderen maskiert er je nach Konfiguration die IP-Adresse des Clients 2. Diese zwei Funktionen des Firewalls 26 dienen dazu, Angriffe auf den Client 2 zu erschweren.
Der Firewall 26 wirkt als Paketfilter folgendermaßen: Der Firewall 26 ermöglicht eine Initialisierung von Verbindungen über TCP nur von dem zu schützenden Client 2 aus. Initialisierungen aus der anderen Richtung, also Initialisierungen von Verbindungen zu dem Client 2 werden am Firewall 26 nur eingeschränkt zugelassen oder generell abgelehnt und verhindern dadurch einen unerwünschten Datenaustausch. Verbindungen über UDP (User Datagram Protocol) werden nur über die Ports, die zur Kommunikation des Clients 2 mit dem Internet 6 und dem internen Firmennetz (Intranet 7) notwendig sind, zugelassen. Auch Pakete, die das Protokoll ICMP (Internet Control Message Protocol) benutzen, werden nur beschränkt auf das unbedingt Notwendige durch den Firewall 26 durchgelassen.
Zum Nutzen der Maskierung: Die IP-Adresse, die der Firewall 26 bei einer Einwahl über eine Telefonleitung in das Internet 6 erhält, wird derzeit i. A. vom Internetprovider dynamisch vergeben. Das bedeutet, daß der Provider der einwählenden Maschine eine IP-Adresse erteilt, die sich von Einwahl zu Einwahl ändern kann. Eine feste IP-Adresse, die sich nicht von Einwahl zu Einwahl ändert, ist nur bei manchen Providern erhältlich. Bei Nutzung des eingebetteten Hard- und Softwaresystems 1 erscheint als IP-Adresse nach außen die IP-Adresse, die vom Provider dem Firewall 26 zugeordnet wird. Die IP-Adresse des Clients 2 wird nach außen hin verborgen. Dadurch, daß die IP-Adresse des Clients 2 nach außen hin nicht erscheint, sind auch Angriffe wesentlich schwerer durchzuführen, da für einen gezielten Angriff die Kenntnis der IP-Adresse des Computers, der angegriffen werden soll, notwendig ist.

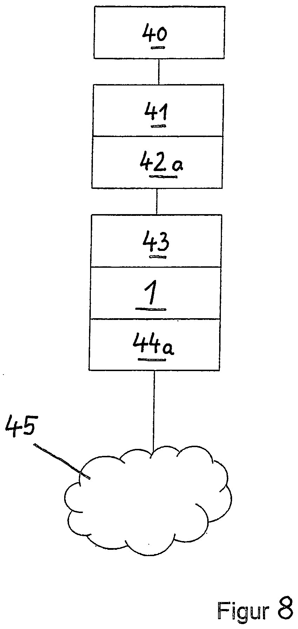

Im Folgenden soll die Erfindung anhand einer weiteren Ausführungsform erläutert werden. Auch in dieser Ausführungsform wird die Schutzfunktion dadurch erzielt, daß ein zusätzliches Computersystem installiert wird, welches vorteilhafterweise ebenfalls als eingebettetes System oder alternativ als Einchiplösung realisiert ist. Eine besondere Nutzerfreundlichkeit wird erreicht, indem das eingebettete System so in das Client-System 2 eingebaut wird, daß es für das Client-System 2 transparent erscheint, für den Benutzer also in der Bedienung kein Unterschied zu einer normalen Netzwerkanbindung besteht.
Im Unterschied zu der Zusammenschaltung der Geräte, die herkömmlicherweise vorgenommen wird, ist in diesem Ausführungsbeispiel das Sicherheits-System als eingebettetes Hard- und Softwaresystem 1 zwischen das Bussystem 43 und das Netzwerkinterface 44a eingefügt (vgl. Fig. 8), wobei das Netzwerkinterface 44a nunmehr vom eingebetteten Hard-und Softwaresystem 1 betrieben wird.

Im einzelnen soll nachfolgend der Unterschied zu dem vorherigen Ausführungsbeispiel und dem herkömmlichen Vorgehen verdeutlicht werden.

Herkömmliche Struktur:
- 40: Benutzeranwendung
- 41: Betriebssystem
- 42: hardwarespezifischer Treiber (z. B. für das Netzwerkinterface)
- 43: Bussystem
- 44: Netzwerkinterface-Hardware
- 45: Netzwerk (z. B. Internet 6 oder Intranet 7)

Neue Struktur:
- 40: Benutzeranwendung
- 41: Betriebssystem
- 42a: hardwarespezifischer, auf das erfindungsgemäße eingebettete System abgestimmter Treiber
- 43: Bussystem

- 1: eingebettetes Hard- und Softwaresystem
- 44a: Netzwerkinterface-Hardware

- 45: Netzwerk

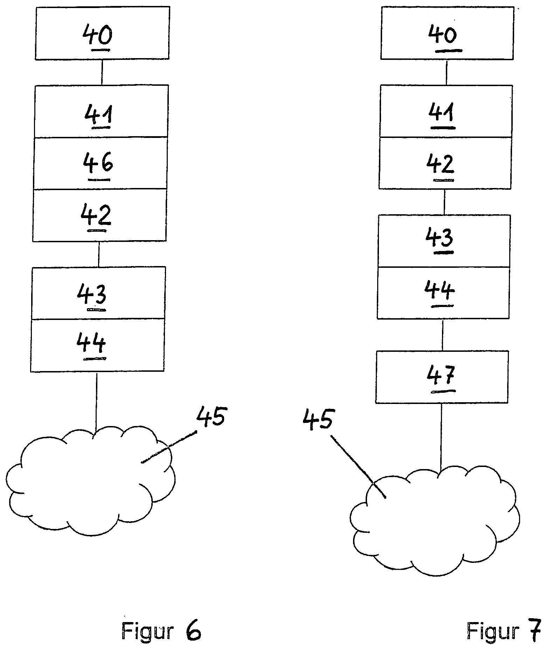

Unter Verwendung der herkömmlichen Struktur benutzt das Betriebssystem 41 einen hardwarespezifischen Treiber 42, der auf die Netzwerkinterface-Hardware 44 spezifisch abgestimmt ist. Dabei muß der hardwarespezifische Treiber 42 die Anforderungen des Betriebssystems 41 auf die jeweilige Hardware 44 abbilden. Die Programmierschnittstelle zwischen Betriebssystem 41 und hardwarespezifischem Treiber 42 ist dabei zwar abhängig vom Betriebssystem, aber für das jeweilige Betriebssystem 41 standardisiert. Damit erscheint die Kette "hardwarespezifischer Treiber 42 - Bussystem 43 - Netzwerkinterface-Hardware 44" für das Betriebssystem 41 unabhängig von den ausgewählten Komponenten jeweils gleich. Bei dieser herkömmlicherweise eingesetzten Struktur befinden sich die im Betriebssystem 41 des zu schützenden Rechners (Client-Rechner 2) installierten Sicherheitsfunktionen (Software) 46 vor dieser Kette "hardwarespezifischer Treiber 42 - Bussystem 43 - Netzwerkinterface-Hardware 44" (vgl. Fig. 6). Alternativ dazu ist auch der Einsatz von externer Sicherheits-Hardware 47, wie beispielsweise der Einsatz von Firewalls, bekannt. In diesem Falle ist das Sicherheitssystem hinter dieser Kette angeordnet (vgl. Fig. 7).

Beim Einsatz der Erfindung wird nun ein eingebettetes Hard-und Softwaresystem 1 zwischen das Bussystem 43 und das Netzwerkinterface 44a eingefügt (vgl. Fig. 8), wobei das Netzwerkinterface 44a nunmehr vom eingebetteten Hard- und Softwaresystem 1 betrieben wird. Der Treiber 42a ist dabei so realisiert, daß er für die Schnittstelle des eingebetteten Hard- und Softwaresystems 1 geeignet ist. Somit erscheint das eingefügte eingebettete Hard- und Softwaresystem 1 für das Betriebssystem 41 völlig transparent. Das Betriebssystem 41 und die Benutzeranwendungen 40 (und alle anderen Schadprogramme wie etwa Viren und Trojanische Pferde) können daher die Schutzfunktionen des eingebetteten Hard- und Softwaresystems 1 nicht stören. Einstellungen zum Schutz können nicht verändert werden. Geheimzuhaltende Informationen, etwa elektronische Schlüssel, sind nur auf dem eingebetteten Hard- und Softwaresystem 1 vorhanden und können nicht vom Client-Rechner 2 abgefragt oder verändert werden.

Ist das eingebettete Hard- und Softwaresystem 1 auf die beschriebene Weise zwischen Client-Rechner 2 und Netzwerk 45 eingefügt worden, durchlaufen sämtliche Datenpakete, die den Client-Rechner 2 verlassen oder auf dem Client-Rechner 2 eingehen, das eingebettete Hard- und Softwaresystem 1 und können entsprechend dem auf dem eingebetteten Hard- und Softwaresystem 1 eingestellten Regelwerk geprüft werden. Dabei kann durch die Prüfung der Durchlaufrichtung des Datenpakets sowie der Sender- und Empfängeradressen sichergestellt werden, daß:
- Keine Datenpakete einer eingehenden Verbindung durchgelassen werden bzw. nur Verbindungen aufgebaut werden können, die im Regelwerk erlaubt sind, so daß der Client-Rechner 2 gegen Angriffe aus dem Netzwerk 45 geschützt ist.
- Nur die Datenpakete einer ausgehenden Datenverbindung durchgelassen werden, deren Aufbau im eingestellten Regelwerk erlaubt ist.

Weiterhin können aus den Absender und Zieladressen diejenigen Pakete erfaßt werden, deren Ziel über ein optionales VPN zu erreichen ist. Diese Pakete können in diesem Falle transparent durch den VPN-Kanal übertragen werden. Allerdings ist hierbei zu empfehlen, den Aufbau des VPN erst nach einer Autorisierung des Nutzers (z. B. durch ein Passwort) auszuführen, um somit eine unbefugte Einwahl in das VPN - etwa bei Abhandenkommen des Sicherheits-Computersystems - zu vermeiden.

Das beispielhafte Sicherheits-Computersystem ist als eingebettetes System des weiteren so auszulegen, daß über die Schnittstelle Bussystem 43 - eingebettetes Hard- und Softwaresystem 1 im normalen Betriebsfall keine Konfigurationsdaten ausgetauscht werden, außer den Daten, die für den Betrieb der Netzwerkinterface-Hardware 44a technisch notwendig sind. Diese Sicherheitseigenschaft wird durch das eingebettete Hard- und Softwaresystem 1 sichergestellt, da die Eigenschaften der Benutzerprogramme 40, des Betriebssystems 41 und eines Treibers 42 bzw. 42a durch den Benutzer oder durch Schadprogramme modifiziert werden können.

Zur Einstellung der Sicherheitseigenschaften und weiteren Konfiguration des eingebetteten Hard- und Softwaresystems 1 ist daher eine besondere Konfigurationsschnittstelle erforderlich, bei der sich der Administrator gegenüber dem eingebetteten Hard- und Softwaresystem 1 authentifizieren muß (etwa über ein Passwort oder mit Hilfe eines elektronischen Schlüssels, z. B. gemäß X.509 Standard). Hierzu könnte sowohl die Schnittstelle 4 von Seiten des Client-Rechners 2 über die Kette "Betriebssystem 41 - hardwarespezifischer, auf das erfindungsgemäße eingebettete System abgestimmter Treiber 42a - Bussystem 43 - eingebettetes Hard- und Softwaresystem 1" verwendet werden als auch eine Fernwartung über die Kette "Netzwerk 45 - Netzwerkinterface Hardware 44a - eingebettetes Hard- und Softwaresystem 1" erfolgen.

Indem in dieser Ausführungsform das eingebettete Hard- und Softwaresystem 1 zur Sicherung eines Client-Rechners 2, zwischen das Betriebssystem 41 des Client-Rechners 2 und das Netzwerk 45 geschaltet wird, wird die normalerweise verwendete Netzwerkinterface-Hardware 44 ersetzt.
Daher ist die bestmögliche Schutzwirkung für den Client-Rechner 2 dadurch gewährleistet, daß das eingebettete Hard-und Softwaresystem 1 zu dem zu schützenden Client-Rechner 2 gehört und dessen speziellen Schutz übernimmt, gleichzeitig aber als eingebettetes System eine unabhängige, von Fehlern seitens des Client-Rechners 2 oder seines Benutzers unbeeinflußte Einheit darstellt.
Dabei sollte das eingebettete Hard- und Softwaresystem 1 für den Benutzer vollständig transparent sein und im Sinne eines besonders geringen Aufwands so mit dem Client-Rechner 2 verbunden sein, daß es möglichst in diesen integriert ist oder vom Nutzer so angeschlossen werden kann, wie eine normale Netzwerkanschluß-Hardware angeschlossen werden würde. Bei einem mobilen Computer als Client-Rechner 2 ist es darüber hinaus besonders vorteilhaft, daß das eingebettete Hard- und Softwaresystem 1 seine Stromversorgung vom Client-Rechner 2 bezieht, wobei diese Eigenschaft auch bei einem stationären Client-Rechner 2 vorteilhaft wäre.
Je nach Client-Rechner 2 kommen dabei verschiedene Bussysteme 43 in Frage. Bei einem Laptop könnte es sich dabei um den CardBus/PCMCIA-Bus handeln, genauso gut könnte es aber auch ein PCI-Bus, USB-Bus, IEEE 1394-Bus (Firewire) oder ein anderes Bussystem 43 sein, über das das Betriebssystem 41 mit dem Netzwerk 45 verbunden wird. Netzwerk 45 bezeichnet eine allgemeine Verbindung von zwei oder mehr Rechnern, zum Beispiel eine Verbindung ins Internet 6 über Ethernet-Hardware, über eine drahtlose Verbindung (Wireless LAN) oder eine andere Technik für Netzwerkanschlüsse. Die Erfindung ist aber auch auf alle anderen Netzwerkverbindungen, z. B. USB-USB-Netzwerke, anwendbar.

Ist das eingebettete Hard- und Softwaresystem 1 beispielsweise auf einer PCMCIA-Karte integriert, so kann bei entsprechender personenbezogener Konfiguration der Regeln und/oder Sicherheitsfunktionen diese Karte etwa als Berechtigungskarte vergeben werden, mit welcher der Inhaber von verschiedenen Computern seine spezifischen Rechte nutzen kann. Bei entsprechender Konfiguration des Computersystems und solcher Berechtigungskarten könnte ein solches Vorgehen z. B. in größeren Unternehmen die Sicherheitsvorkehrungen vereinfachen und den Schutz vor unbefugten Zugriffen auf Daten erhöhen.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

- 1: eingebettetes Hard- und Softwaresystem
- 2: Client
- 3: Server
- 4: Client-Schnittstelle
- 5: Server-Schnittstelle
- 6: Internet
- 7: Intranet
- 8: Kommunikationsverbindung zwischen Client und eingebettetem Hard- und Softwaresystem
- 9: Prozessor
- 10: RAM
- 11: Flash ROM
- 12: Stromversorgung
- 13: RS 232-Schnittstelle (serielle Schnittstelle)
- 14: Ethernet-Schnittstelle
- 15: USB-Schnittstelle
- 16: IRDA-Schnittstelle
- 17: Bluetooth-Schnittstelle
- 18: Modem/ISDN-Modul
- 19: RJ-45- Schnittstelle
- 20: transparenter Router/VPN (IPSEC)
- 21: Systemüberwachung
- 22: IDS
- 23: DHCP
- 24: automatisches Update
- 25: Key Management
- 26: Firewall
- 27: Remote Control
- 28: weitere optionale Software-Module (z. B. Virenscanner)
- 29: Verbindungsaufbau zum Client
- 30: Austausch unverschlüsselter Daten
- 31: Austausch der IP-Adressen
- 32: Verbindungsaufbau zum Server
- 33: Datenaustausch zum Management
- 34: Datenaustausch zur Konfiguration des eingebetteten Hard- und Softwaresystems
- 35: Datenaustausch beim Update des eingebetteten Hard- und Softwaresystems
- 36: UMTS-Schnittstelle
- 37: DSL-Schnittstelle
- 38: GPRS-Schnittstelle
- 39: POT-Schnittstelle
- 40: Benutzeranwendung
- 41: Betriebssystem
- 42: hardwarespezifischer Treiber (z. B. für das Netzwerkinterface)
- 42a: hardwarespezifischer, auf das erfindungsgemäße eingebettete System abgestimmter Treiber
- 43: Bussystem
- 44: Netzwerkinterface-Hardware
- 44a: Netzwerkinterface-Hardware
- 45: Netzwerk
- 46: im Betriebssystem des zu schützenden Rechners installierte Sicherheitsfunktionen (Software)
- 47: externe Sicherheits-Hardware

## Patentansprüche

1. Verfahren zur Sicherung der Kommunikation in Netzwerken (6) unter Zwischenschaltung eines Sicherheits Computersystems (1) zwischen eine zu schützende Datenverarbeitungseinrichtung (2) und das Netzwerk (6), wobei der Datenaustausch zwischen der zu schützenden Datenverarbeitungseinrichtung (2) und dem Netzwerk (6) durch mindestens ein auf dem Sicherheits-Computersystem (1) als embedded Software implementiertes Computerprogramm gemäß einem vorgebbaren Regelwerk überwacht und/oder gesteuert wird, wobei der Datenaustausch über eine Schnittstelle des Sicherheits-Computersystems (1)erfolgt, über die keine Konfigurationsdaten ausgetauscht werden,
**dadurch gekennzeichnet, daß**
Sicherheitseigenschaften und weitere Konfigurationen des Sicherheits-Computersystems (1) nur über eine Konfigurationsschnittstelle des Sicherheits-Computersystems (1) nach einer Authentifikation gegenüber dem Sicherheits-Computersystems (1) eingestellt werden können.

2. Verfahren nach Anspruch 1,
**dadurch gekennzeichnet, daß**
das Sicherheits-Computersystem (1) mit dem Bus-System (43) der zu schützenden Datenverarbeitungseinrichtung (2) verbunden und eine Verbindung zwischen der zu schützenden Datenverarbeitungseinrichtung (2) und dem Netzwerk (6) über die Schnittstelle des Sicherheits-Computersystems (1) hergestellt wird.

3. Verfahren nach einem der Ansprüche 1 oder 2,
**dadurch gekennzeichnet, daß**
das für die Überwachung und/oder Steuerung der zwischen der zu schützenden Datenverarbeitungseinrichtung (2) und dem Netzwerk (6) auszutauschenden Daten vorgegebene Regelwerk personenbezogene und/oder auf die zu schützende Datenverarbeitungseinrichtung (2) individuell vorgegebene Regeln umfaßt.

4. Verfahren nach Anspruch 3,
**dadurch gekennzeichnet, daß**
das individuell vorgegebene Regelwerk
- die Berechtigung zum Zugriff aus Quellsystemen auf die zu schützende Datenverarbeitungseinrichtung (2) prüft und/oder
- die Berechtigung zum Zugriff auf Zielsysteme von der zu schützenden Datenverarbeitungseinrichtung (2) aus prüft und/oder
- die Ver- und/oder Entschlüsselung der auszutauschenden Daten realisiert und/oder
- den Aufbau eines Virtual Private Network (VPN) vornimmt und die auszutauschenden Daten transparent durch den VPN-Kanal überträgt und/oder
- den Inhalt der auszutauschenden Daten analysiert.

5. Verfahren nach Anspruch 4,
**dadurch gekennzeichnet, daß**
der Aufbau eines VPN erst nach erfolgreicher Authentifikation erfolgt.

6. Verfahren nach Anspruch 4,
**dadurch gekennzeichnet, daß**
die Analyse des Inhalt der auszutauschenden Daten der Detektion von Viren und/oder Trojanischen Pferden
dient.

7. Verfahren nach einem der vorangehenden Ansprüche,
**dadurch gekennzeichnet, daß**
die Konfiguration des Sicherheits-Computersystems (1) und/oder der embedded Software über eine Schnittstelle zum Netzwerk (6) erfolgt.

8. Verfahren nach einem der vorangehenden Ansprüche,
**dadurch gekennzeichnet, daß**
die Wartung und/oder Pflege des Sicherheits-Computersystems (1)
- von der zu schützenden Datenverarbeitungseinrichtung (2) aus oder
- als Fernwartung über das Netzwerk (6) erfolgt.

9. Verfahren nach einem der vorangehenden Ansprüche,
**dadurch gekennzeichnet, daß**
die Wartung und/oder Pflege der embedded Software die Erweiterung der Funktionalität des als embedded Software implementierten Computerprogramms umfaßt.

10. Verfahren nach einem der vorangehenden Ansprüche,
**dadurch gekennzeichnet, daß**
das Sicherheits-Computersystem (1) für die zu schützende Datenverarbeitungseinrichtung (2) und/oder für das Netzwerk (6) transparent erscheint.

11. Verfahren nach einem der vorangehenden Ansprüche,
**dadurch gekennzeichnet, daß**
das Sicherheits-Computersystem (1) als eingebettetes System in das Kommunikationsinterface der zu schützenden Datenverarbeitungseinrichtung (2) integriert wird.

12. Verfahren nach einem der vorangehenden Ansprüche, **dadurch gekennzeichnet, daß**
das Sicherheits-Computersystem (1)
- als Einsteckkarte oder
- als PCMCIA-Karte
in die zu schützende Datenverarbeitungseinrichtung (2) integriert wird.

13. Verfahren nach einem der vorangehenden Ansprüche,
**dadurch gekennzeichnet, daß**
das Sicherheits-Computersystem (1) wie herkömmliche Netzwerkanschluß-Hardware an die zu schützende Datenverarbeitungseinrichtung (2) angeschlossen wird.

14. Verfahren nach einem der vorangehenden Ansprüche,
**dadurch gekennzeichnet, daß**
die Stromversorgung des Sicherheits-Computersystems über die zu schützende Datenverarbeitungseinrichtung erfolgt.

15. Verfahren nach einem der vorangehenden Ansprüche,
**dadurch gekennzeichnet, daß**
geheimzuhaltende Daten wie beispielsweise elektronische Schlüssel oder elektronische Signaturen nur auf dem Sicherheits-Computersystem (1) vorhanden sind.

16. Verfahren nach einem der vorangehenden Ansprüche,
**dadurch gekennzeichnet, daß**
auf dem Sicherheits-Computersystem (1) vorhandene geheimzuhaltende Daten von Seiten der zu schützenden Datenverarbeitungseinrichtung (2) nicht oder nur nach Eingabe eines Passwortes veränderbar oder abfragbar
sind.

17. Verfahren nach einem der vorangehenden Ansprüche,
**dadurch gekennzeichnet, daß**
alle zwischen der zu schützenden Datenverarbeitungseinrichtung (2) und dem Netzwerk (6) auszutauschende Daten das Sicherheits-Computersystem (1) durchlaufen.

18. Computersystem (1) zur Sicherung der Kommunikation in Netzwerken (6), wobei das Computersystem (1) als eingebettetes Hard- und Softwaresystem ausgebildet ist und mindestens ein Mittel zum Datenaustausch mit einer zu schützenden Datenverarbeitungseinrichtung (2), mindestens ein Mittel zum Datenaustausch mit dem Netzwerk (6) und mindestens ein Mittel zur Überwachung und/oder Steuerung der Kommunikation zwischen der zu schützenden Datenverarbeitungseinrichtung (2) und dem Netzwerk (6) umfaßt, wobei auf dem Computersystem (1) ein Computerprogramm zur Überwachung und/oder Steuerung des Datenaustauschs zwischen der zu schützenden Datenverarbeitungseinrichtung (2) und dem Netzwerk (6) als embedded Software implementiert ist, wobei der Datenaustausch über eine Schnittstelle erfolgt, über die keine Konfigurationsdaten ausgetauscht werden, wobei
**dadurch gekennzeichnet, daß**
das Sicherheits-Computersystems (1) derart eingerichtet ist, dass Sicherheitseigenschaften und weitere Konfiguration nur über eine Konfigurationsschnittstelle nach einer Authentifikation gegenüber dem Sicherheits-Computersystems (1) eingestellt werden können.

19. Computersystem nach Anspruch 18,
**dadurch gekennzeichnet, daß**
ein Mittel zum Datenaustausch mit einer zu schützenden Datenverarbeitungseinrichtung (2) an das Bus-System (43) der zu schützenden Datenverarbeitungseinrichtung (2) anschließbar ist und/oder
ein Mittel zum Datenaustausch mit dem Netzwerk (6) als Netzwerk-Interface ausgebildet ist.

20. Computersystem nach einem der Ansprüche 18 oder 19, **dadurch gekennzeichnet, daß**
ein Mittel zum Datenaustausch mit einer zu schützenden Datenverarbeitungseinrichtung (2)
- als PCMCIA-Bus oder
- als PCI-Bus oder
- als USB-Bus oder
- als IEEE 1394-Bus (Firewire)
ausgebildet ist.

21. Computersystem nach Anspruch 18,
**dadurch gekennzeichnet, daß**
ein Mittel zum Datenaustausch mit einer zu schützenden Datenverarbeitungseinrichtung (2)
- als RS-232-Schnittstelle (13) oder
- als Ethernet-Schnittstelle (14) oder
- als USB-Schnittstelle (15)
ausgebildet ist.

22. Computersystem nach einem der Ansprüche 18 bis 21, **dadurch gekennzeichnet, daß**
wenigstens ein Mittel zum Datenaustausch mit dem Netzwerk (6)
- ein Modem und/oder
- einen Funktelefonprozessor
umfaßt.

23. Computersystem nach einem der Ansprüche 18 bis 22,
**dadurch gekennzeichnet, daß**
wenigstens ein Mittel zur Überwachung und/oder Steuerung der Kommunikation
- einen transparenten Router/VPN (IPSEC) (20) und/oder
- einen DHCP (23) und/oder
- ein Key Management (25) und/oder
- einen Firewall (26) und/oder
- eine Remote Control (27)
umfaßt.

24. Computersystem nach einem der Ansprüche 18 bis 23,
**dadurch gekennzeichnet, daß**
wenigstens ein Mittel zur Überwachung und/oder Steuerung der Kommunikation
- eine Systemüberwachung (21) und/oder
- ein IDS (22) und/oder
- ein automatisches Update (24) und/oder
- einen Viren-Scanner und/oder
- ein Intrusion Detection System und/oder
- ein Public Key Management (25)
als Module umfaßt.

25. Computersystem nach einem der Ansprüche 18 bis 24,
**dadurch gekennzeichnet, daß**
das Computersystem (1) als System on Chip ausgebildet ist.

26. Computersystem nach einem der Ansprüche 18 bis 25,
**dadurch gekennzeichnet, daß**
das Computersystem (1) in ein Kabel oder eine Karte oder ein Chip für den Netzwerkzugang integriert ist

27. Computersystem nach einem der Ansprüche 18 bis 26, **dadurch gekennzeichnet, daß**
das Computersystem (1)
- als Einsteckkarte oder
- als PCMCIA-Karte
ausgebildet ist.

28. Computersystem nach einem der Ansprüche 18 bis 27, **dadurch gekennzeichnet, daß**
die zu schützende Datenverarbeitungseinrichtung (2)
- als Personalcomputer oder
- als Laptop oder
- als netzwerkfähiger Palmtop oder
- als netzwerkfähiges Telefon
ausgebildet ist.

## Claims

1. A method for securing communication in networks (6) with the interposition of a security computer system (1) between a data processing device (2) to be protected and the network (6), wherein the data exchange between the data processing device (2) to be protected and the network (6) is monitored and/or controlled by means of at least one computer program which is implemented on the security computer system (1) as embedded software according to a predefinable set of rules, wherein the data exchange is effected via an interface of the security computer system (1) via which configuration data is not exchanged,
**characterized in that**
security features and other configurations of the security computer system (1) can only be set via a configuration interface of the security computer system (1) after an authentication with respect to the security computer system (1).

2. The method according to clam 1,
**characterized in that**
the security computer system (1) is connected to the bus system (43) of the data processing device (2) to be protected, and a connection between the data processing device (2) to be protected and the network (6) is established via the interface of the security computer system (1).

3. The method according to any of claims 1 or 2,
**characterized in that**
the set of rules predefined for monitoring and/or controlling the data to be exchanged between the data processing device (2) to be protected and the network (6) comprises individual-related rules and/or rules individually predefined for the data processing device (1) to be protected.

4. The method according to claim 3,
**characterized in that**
the individually predefined set of rules
- checks the authorization for the access from source systems to the data processing device (2) to be protected, and/or
- checks the authorization for the access to target systems from the data processing device (2) to be protected, and/or
- realizes the encryption and/or decryption of the data to be exchanged, and/or
- performs the establishment of a virtual private network (VPN) and transparently transmits the data to be exchanged through the VPN-channel, and/or
- analyzes the content of the data to be exchanged.

5. The method according to claim 4,
**characterized in that**
the establishment of a VPN is performed only after a successful authentication.

6. The method according to claim 4,
**characterized in that**
the analysis of the content of the data to be exchanged serves to detect viruses and/or Trojan horses.

7. The method according to any of the preceding claims,
**characterized in that**
the configuration of the security computer system (1) and/or the embedded software is carried out via an interface to the network (6).

8. The method according to any of the preceding claims,
**characterized in that**
the service and/or maintenance of the security computer system (1) is carried out
- from the data processing device (2) to be protected, or
- as remote maintenance via the network (6).

9. The method according to any of the preceding claims,
**characterized in that**
the service and/or maintenance of the embedded software comprises the extension of the functionality of the computer program implemented as embedded software.

10. The method according to any of the preceding claims,
**characterized in that**
the security computer system (1) for the data processing device (2) to be protected and/or for the network (6) appears transparent.

11. The method according to any of the preceding claims,
**characterized in that**
the security computer system (1) is integrated in the communication interface of the data processing device (2) to be protected as embedded system.

12. The method according to any of the preceding claims,
**characterized in that**
the security computer system (1) is integrated in the data processing device (2) to be protected
- as a plug-in card or
- as a PCMCIA card.

13. The method according to any of the preceding claims,
**characterized in that**
the security computer system (1) is connected to the data processing device (2) to be protected in the manner of a conventional network connection hardware.

14. The method according to any of the preceding claims,
**characterized in that**
the current supply of the security computer system is effected via the data processing device to be protected.

15. The method according to any of the preceding claims,
**characterized in that**
data to be kept secret, such as electronic keys or electronic signatures, is exclusively present on the security computer system (1).

16. The method according to any of the preceding claims,
**characterized in that**
data to be kept secret which are present on the security computer system (1) cannot be changed or queried by the data processing device (2) to be protected or can be changed or queried only after entering a password.

17. The method according to any of the preceding claims,
**characterized in that**
all data to be exchanged between the data processing device (2) to be protected and the network (6) passes through the security computer system (1).

18. A computer system (1) for securing the communication in networks (6), wherein the computer system (1) is formed as an embedded hardware and software system and comprises at least one means for exchanging data with a data processing device (2) to be protected, at least one means for exchanging data with the network (6) and at least one means for monitoring and/or controlling the communication between the data processing device (2) to be protected and the network (6), wherein a computer program for monitoring and/or controlling the data exchange between the data processing device (2) to be protected and the network (6) is implemented on the computer system (1) as embedded software, wherein the data exchange is effected via an interface via which configuration data is not exchanged,
**characterized in that**
the security computer system (1) is configured in such a way that security features and any other configuration can be set only via a configuration interface after an authentication with respect to the security computer system (1).

19. The computer system according to claim 18,
**characterized in that**
a means for exchanging data with a data processing device (2) to be protected can be connected to the bus system (43) of the data processing device (2) to be protected, and/or
a means for exchanging data with the network (6) is formed as network interface.

20. The computer system according to any of claims 18 or 19,
**characterized in that**
a means for exchanging data with a data processing device (2) to be protected is formed
- as a PCMCIA bus or
- as a PCI bus or
- as a USB bus or
- as a IEEE 1394 bus (firewire).

21. The computer system according to claim 18,
**characterized in that**
a means for exchanging data with a data processing device (2) to be protected is formed
- as a RS 232 interface (13) or
- as an Ethernet interface (14) or
- as a USB interface (15).

22. The computer system according to any of claims 18 to 21, **characterized in that**
at least one means for exchanging data with the network (6) comprises
- a modem and/or
- a radiotelephone processor.

23. The computer system according to any of claims 18 to 22, **characterized in that**
at least one means for monitoring and/or controlling the communication comprises
- a transparent router/VPN (IPSEC) (20) and/or
- a DHCP (23) and/or
- a key management (25) and/or
- a firewall (26) and/or
- a remote control (27).

24. The computer system according to any of claims 18 to 23, **characterized in that**
at least one means for monitoring and/or controlling the communication comprises
- system monitoring (21) and/or
- an IDS (22) and/or
- an automatic update (24) and/or
- a virus scanner and/or
- an intrusion detection system and/or
- a public key management (25)
as modules.

25. The computer system according to any of claims 18 to 24,
**characterized in that**
the computer system (1) is formed as a System-on-Chip.

26. The computer system according to any of claims 18 to 25,
**characterized in that**
the computer system (1) is integrated in a cable or a card or a chip for the network access.

27. The computer system according to any of claims 18 to 26,
**characterized in that**
the computer system (1) is formed
- as a plug-in card or
- as a PCMCIA card.

28. The computer system according to any of claims 18 to 27,
**characterized in that**
the data processing device (2) to be protected is formed
- as a personal computer or
- as a laptop or
- as a network-capable palmtop or
- as a network-capable telephone.

## Revendications

1. Procédé permettant la protection de la communication dans des réseaux (6) avec l'interposition d'un système informatique de sécurité (1) entre un dispositif de traitement de données (2) à protéger et le réseau (6), dans lequel l'échange de données entre le dispositif de traitement de données (2) à protéger et le réseau (6) est surveillé et/ou commandé par au moins un programme informatique implémenté dans le système informatique de sécurité (1) comme logiciel embarqué en fonction d'un ensemble de règles prédéfinissable, l'échange de données étant effectué via une interface du système informatique de sécurité (1) via laquelle des données de configuration ne sont pas échangées,
**caractérisé en ce que**
des caractéristiques de sécurité et d'autres configurations du système informatique de sécurité (1) peuvent être réglées seulement via une interface de configuration du système informatique de sécurité (1) après une authentification vis-à-vis du système informatique de sécurité (1).

2. Procédé selon la revendication 1,
**caractérisé en ce que**
le système informatique de sécurité (1) est relié au système de bus (43) du dispositif de traitement de données (2) à protéger, et une connexion entre le dispositif de traitement de données (2) à protéger et le réseau (6) est établie via l'interface du système informatique de sécurité (1).

3. Procédé selon l'une des revendications 1 ou 2,
**caractérisé en ce que**
l'ensemble de règles prédéfini pour la surveillance et/ou la commande des données à échanger entre le dispositif de traitement de données (2) à protéger et le réseau (6) comprend des règles relatives à la personne et/ou prédéfinies individuellement pour le dispositif de traitement de données (2) à protéger.

4. Procédé selon la revendication 3,
**caractérisé en ce que**
l'ensemble de règles prédéfini individuellement
- vérifie l'autorisation d'accès au dispositif de traitement de données (2) à protéger à partir de systèmes source, et/ou
- vérifie l'autorisation d'accès à des systèmes cible à partir du dispositif de traitement de données (2) à protéger, et/ou
- met en oeuvre le cryptage et/ou le décryptage des données à échanger, et/ou
- effectue l'établissement d'un Virtual Private Network (VPN) et transmet les données à échanger de manière transparente à travers le canal VPN, et/ou
- analyse le contenu des données à échanger.

5. Procédé selon la revendication 4,
**caractérisé en ce que**
l'établissement d'un VPN n'est effectué qu'après l'authentification réussie.

6. Procédé selon la revendication 4,
**caractérisé en ce que**
l'analyse du contenu des données à échanger sert à la détection de virus et/ou de chevaux de Troie.

7. Procédé selon l'une des revendications précédentes,
**caractérisé en ce que**
la configuration du système informatique de sécurité (1) et/ou du logiciel embarqué est effectuée via une interface au réseau (6).

8. Procédé selon l'une des revendications précédentes,
**caractérisé en ce que**
la maintenance et/ou l'entretien du système informatique de sécurité (1) est effectué/e
- à partir du dispositif de traitement de données (2) ou
- via le réseau (6) en tant que télémaintenance.

9. Procédé selon l'une des revendications précédentes,
**caractérisé en ce que**
la maintenance et/ou l'entretien du logiciel embarqué comprend l'extension de la fonctionnalité du programme informatique implémenté comme logiciel embarqué.

10. Procédé selon l'une des revendications précédentes,
**caractérisé en ce que**
le système informatique de sécurité (1) pour le dispositif de traitement de données (2) à protéger et/ou pour le réseau (6) apparaît transparent.

11. Procédé selon l'une des revendications précédentes,
**caractérisé en ce que**
le système informatique de sécurité (1) est intégré dans l'interface de communication du dispositif de traitement de données (2) à protéger comme système embarqué.

12. Procédé selon l'une des revendications précédentes,
**caractérisé en ce que**
le système informatique de sécurité (1) est intégré dans le dispositif de traitement de données (2) à protéger
- comme carte enfichable ou
- comme carte PCMCIA.

13. Procédé selon l'une des revendications précédentes,
**caractérisé en ce que**
le système informatique de sécurité (1) est raccordé au dispositif de traitement de données (2) à protéger comme un matériel pour la connexion au réseau conventionnel.

14. Procédé selon l'une des revendications précédentes,
**caractérisé en ce que**
l'alimentation en courant du système informatique de sécurité est effectuée via le dispositif de traitement de données à protéger.

15. Procédé selon l'une des revendications précédentes,
**caractérisé en ce que**
des données dont la confidentialité doit être assurée, comme par exemple des clés électroniques ou des signatures électroniques, ne sont présentes que dans le système informatique de sécurité (1).

16. Procédé selon l'une des revendications précédentes,
**caractérisé en ce que**
des donnés dont la confidentialité doit être assurée et qui sont présentes dans le système informatique de sécurité (1) ne peuvent pas être changées ou requêtées par le dispositif de traitement de données (2) à protéger ou ne peuvent être changées ou requêtés qu'après avoir entré un mot de passe.

17. Procédé selon l'une des revendications précédentes,
**caractérisé en ce que**
toutes les données à échanger entre le dispositif de traitement de données (2) à protéger et le réseau (6) passent par le système informatique de sécurité (1).

18. Système informatique (1) permettant la protection de la communication dans des réseaux (6), dans lequel le système informatique (1) est conçu comme système matériel et logiciel embarqué et comprend au moins un moyen d'échange de données avec un dispositif de traitement de données (2) à protéger, au moins un moyen d'échange de données avec le réseau (6) et au moins un moyen de surveillance et/ou de commande de la communication entre le dispositif de traitement de données (2) à protéger et le réseau (6), un programme informatique de surveillance et/ou de commande de l'échange de données entre le dispositif de traitement de données (2) à protéger et le réseau (6) étant implémenté dans le système informatique (1) comme logiciel embarqué, l'échange de données étant effectué via une interface via laquelle des données de configuration ne sont pas échangées,
**caractérisé en ce que**
le système informatique de sécurité (1) étant configuré de telle manière que des caractéristiques de sécurité et d'autres configurations puissent être réglées seulement via une interface de configuration après une authentification vis-à-vis du système informatique de sécurité (1).

19. Système informatique selon la revendication 18,
**caractérisé en ce qu'**
un moyen d'échange de données avec un dispositif de traitement de données (2) à protéger peut être raccordé au système de bus (43) du dispositif de traitement de données (2) à protéger, et/ou
un moyen d'échange de données avec le réseau (6) est conçu comme interface réseau.

20. Système informatique selon l'une des revendications 18 ou 19,
**caractérisé en ce qu'**
un moyen d'échange de données avec un dispositif de traitement de données (2) à protéger est conçu
- comme bus PCMCIA ou
- comme bus PCI ou
- comme bus USB ou
- comme bus IEEE 1394 (firewire).

21. Système informatique selon la revendication 18,
**caractérisé en ce qu'**
un moyen d'échange de données avec un dispositif de traitement de données (2) à protéger est conçu
- comme interface RS 232 (13) ou
- comme interface Ethernet (14) ou
- comme interface USB (15).

22. Système informatique selon l'une des revendications 18 à 21, **caractérisé en ce qu'**
au moins un moyen d'échange de données avec le réseau (6) comprend
- un modem et/ou
- un processeur de radiotéléphone.

23. Système informatique selon l'une des revendications 18 à 22, **caractérisé en ce qu'**
au moins un moyen de surveillance et/ou de commande de la communication comprend
- un routeur /VPN (IPSEC) transparent (20) et/ou
- un DHCP (23) et/ou
- une gestion de clés (25) et/ou
- un coupe-feu (26) et/ou
- un Remote Control (27).

24. Système informatique selon l'une des revendications 18 à 23, **caractérisé en ce qu'**
au moins un moyen de surveillance et/ou commande de la communication comprend
- une surveillance de système (21) et/ou
- un IDS (22) et/ou
- une mise à jour automatique (24) et/ou
- un scanner de virus et/ou
- un système de détection d'intrusion et/ou
- une gestion de clés publiques (25)
comme modules.

25. Système informatique selon l'une des revendications 18 à 24, **caractérisé en ce que**
le système informatique (1) est conçu comme système sur une puce.

26. Système informatique selon l'une des revendications 18 à 25, **caractérisé en ce que**
le système informatique (1) est intégré dans un câble ou une carte ou une puce destiné/e à l'accès au réseau.

27. Système informatique selon l'une des revendications 18 à 26, **caractérisé en ce que**
le système informatique (1) est conçu
- comme carte enfichable, ou
- comme carte PCMCIA.

28. Système informatique selon l'une des revendications 18 à 27, **caractérisé en ce que**
le dispositif de traitement de données (2) à protéger est conçu
- comme ordinateur individuel ou
- comme ordinateur portable ou
- comme paume connectable à un réseau ou
- comme téléphone connectable à un réseau.
